# EUROPEAN PATENT SPECIFICATION

(11) **EP 2 890 083 B1**
(45) Date of publication and mention of the grant of the patent: **01.03.2017**
(21) Application number: 14275258.3
(22) Date of filing: 16.12.2014
(51) Int. Cl.: H04L 29/06, H04W 12/04, H04W 84/18

(54) **Key distribution system and method**
Vorrichtung und Verfahren zur Schlüsselverteilung
Système et méthode de distribution de clés

(30) Priority: 24.12.2013 KR 20130162375
(43) Date of publication of application: 01.07.2015
(73) Proprietor: Samsung Electro-Mechanics Co., Ltd., Suwon-Si, Gyeonggi-Do 443-743 (KR)
(72) Inventor: Ryu, Hoon, 443-743 Gyeonggi-Do (KR)
(74) Representative: Potter Clarkson LLP

(56) References cited:
- US-A1- 2008 130 902
- US-A1- 2012 124 373
- APURVA MOHAN ET AL: "Towards addressing common security issues in smart grid specifications", RESILIENT CONTROL SYSTEMS (ISRCS), 2012 5TH INTERNATIONAL SYMPOSIUM ON, IEEE, 14 August 2012 (2012-08-14), pages 174-180, XP032241330, DOI: 10.1109/ISRCS.2012.6309314 ISBN: 978-1-4673-0161-9

## Description

### BACKGROUND

### 1. Technical Field

The present disclosure generally relates to a network system and a networking method.

### 2. Description of the Related Art

In accordance with rapid development of a related technology, a wireless network system has been introduced in various fields such as an industrial field, a general home, or the like.

For example, the wireless network system indicates a system in which two terminals physically spaced apart from each other may transmit and receive data depending on various wireless networking protocols such as a cellular protocol, a WiFi protocol, a Zigbee protocol, and the like.

In the wireless network system, the data that is transmitted and received in the terminals is generally encrypted. For instance, a 128-bit or 256-bit based advanced encryption standard (AES) encryption algorithm, or the like, may be applied.

In order to apply the AES encryption algorithm, or the like, the terminals may possess the same key. In a Zigbee standard, this key is called a network key (NWK), and a method for sharing the NWK in an upper service layer called an application profile has been separately defined. However, detailed methods have not been separately defined, such that they have been implemented in various schemes depending on manufacturers.

Generally, a process in which two different terminals share the NWK with each other and register identification numbers thereof is called a commissioning process. According to the related art, convenience of the commissioning process may decrease in order to improve security thereof, and the security of the commissioning process may decrease in order to improve the convenience thereof.

That is, according to the related art, there may be a trade-off between the security and the convenience of the commissioning process.

"Towards Addressing Common Security Issues in Smart Grid Specifications" by Apurva Mohan and Himanshu Khurana, published on August 2012 in the conference papers of IEEE 5th International Symposium on Resilient Control Systems, discloses security considerations for developing common security issues in smart grid standards that employ communication protocols. The publication provides guidelines for drafting security into smart grid standards either when they are updated or when new standards are developed; draws examples from the ZigBee Smart Energy Profile standard for security requirements; and makes recommendations for designing security in similar standards.

According to this document, when a new device is to join a network , a secret pre-configured in the device is provided to a trust centre in the network using an out of band channel. The trust centre encrypts the network key with the secret and sends the encrypted network key to the new device. The new device is then able to use the network key for encrypting/decrypting communications in the network.

US 2008/130902 A1 discloses a system having a secure wireless infrastructure with a key server acting as a key distribution center. The key server admits new nodes or devices, deploys and updates keys, and authorises secure communications sessions. The system shares secure keying information with a new device not already a member of a secure wireless network. The new device then sends a birth key encrypted request to join the secure network via an exposed communication mode.

US 2012/124373 A1 discloses a trust centre for a wireless personal area network arranged to perform authentication of communication devices joining the network. The trust centre is operatively coupled to a security server which is arranged to store communication device keys. Upon a new communication device joining the network, the trust centre requests from the security server a communication device key of the joining communication device for the purpose of authenticating the joining communication device.

Therefore, an effort to develop a technology capable of improving the convenience of the commissioning process while minimizing a decrease in the security of the commissioning process has been made.

### SUMMARY

Some embodiments of the present disclosure may provide a network system capable of, for example, but not limited to, improving security while readily commissioning terminals.

Some embodiments of the present disclosure may provide a networking method capable of, for example, but not limited to, improving security while readily commissioning terminals.

Objects of the present disclosure are not limited to the above-mentioned description. That is, other objects that are not mentioned may be obviously understood by those skilled in the art to which the present invention pertains from the following description.

According to an exemplary embodiment of the present disclosure, a network system may comprise a first terminal possessing a network key, encrypting at least one data using the network key and then transmitting the encrypted data, and receiving and decrypting the data encrypted using the network key; a second terminal; and a networking auxiliary device providing a transmission key to the first terminal and/or the second terminal. The transmission key may be invalidated when a predefined time elapses. The first terminal may transmit the network key encrypted using the transmission key to the second terminal, and the second terminal may decrypt the network key, which is encrypted using the transmission key, using the transmission key and then stores the decrypted network key.

The transmission key may be generated by at least one selected among the first terminal, the second terminal, and the networking auxiliary device.

At least one selected among the first terminal, the second terminal, and the networking auxiliary device may transmit the transmission key in a state in which it lowers transmission power to a predefined level or less.

The networking auxiliary device may transmit and receive the transmission key in a state in which it approaches the first terminal and/or the second terminal at a predefined distance, for example, but not limited to, within one meter from the first terminal and/or the second terminal, and the transmission power may be lowered to a level or less at which data are validly received only within the predefined distance.

According to another exemplary embodiment of the present disclosure which is not claimed, a network system may comprise a first terminal having a network key, encrypting at least one data using the network key and then transmitting the encrypted data, and receiving and decrypting the data encrypted using the network key; a second terminal receiving and possessing the network key encrypted using a transmission key, encrypting at least one data using the network key and then transmitting the encrypted data, and receiving and decrypting the data encrypted using the network key; and a networking auxiliary device providing the transmission key to the first terminal and/or the second terminal. The transmission key may be invalidated when a predefined time elapses.

According to still another exemplary embodiment of the present disclosure, there may be provided a networking method of a network system. The network system may include a first terminal having a network key, encrypting at least one data using the network key and then transmitting the encrypted data, and receiving and decrypting the data encrypted using the network key; a second terminal; and a networking auxiliary device. The networking method may include steps of transmitting a transmission key to the networking auxiliary device, by the first terminal; receiving and storing the transmission key, by the networking auxiliary device; transmitting the transmission key to the second terminal, by the networking auxiliary device; receiving and storing the transmission key, by the second terminal; encrypting the network key using the transmission key and then transmitting the encrypted network key to the second terminal, by the first terminal; receiving the encrypted network key and then decrypting the encrypted network key using the transmission key, by the second terminal; and transmitting and receiving data encrypted using the network key between the first terminal and the second terminal. The transmission key may be invalidated when a predefined time elapses.

The transmission key may be transmitted in a state in which transmission power of the first terminal or the networking auxiliary device is lowered to a predefined level or less.

The transmission key may be transmitted and received in a state in which the networking auxiliary device approaches the first terminal or the second terminal at a distance, for example, but not limited to, within one meter from the first terminal and/or the second terminal, and the transmission power may be lowered to a level or less at which data are validly received only within one meter.

The transmission key may be transmitted and received between the first terminal and the networking auxiliary device in a state in which it is encrypted using identification information of the networking auxiliary device, and the transmission key may be transmitted and received between the networking auxiliary device and the second terminal in a state in which it is encrypted using a common standard key.

The step of transmitting and receiving the data encrypted using the network key between the first terminal and the second terminal may be performed in a state in which transmission power of the first terminal is raised.

According to yet still another exemplary embodiment of the present invention that is not claimed, there may be provided a networking method of a network system. The network system may comprise a first terminal possessing a network key, encrypting at least one data using the network key and then transmitting the encrypted data, and receiving and decrypting the data encrypted using the network key; a second terminal; and a networking auxiliary device. The networking method may comprise steps of transmitting a transmission key request, by the networking auxiliary device; transmitting a transmission key corresponding to the transmission key request to the networking auxiliary device, by the first terminal receiving the transmission key request, in a state in which the networking auxiliary device approaches the first terminal; storing the transmission key, by the networking auxiliary device; transmitting the transmission key to the second terminal, by the networking auxiliary device, in a state in which the networking auxiliary device approaches the second terminal; receiving and storing the transmission key, by the second terminal; encrypting the network key using the transmission key and then transmitting the encrypted network key to the second terminal, by the first terminal; receiving the encrypted network key and then decrypting the encrypted network key using the transmission key, by the second terminal; and transmitting and receiving data encrypted using the network key between the first terminal and the second terminal. The transmission key may be invalidated when a predefined time elapses.

Additional features of the present disclosure may be defined or clarified by the following description.

### BRIEF DESCRIPTION OF THE DRAWINGS

FIG. 1 is a block diagram schematically showing a network system according to an exemplary embodiment of the present disclosure;
FIG. 2 is a block diagram schematically showing a first terminal according to an exemplary embodiment of the present disclosure;
FIG. 3 is a block diagram schematically showing a second terminal according to an exemplary embodiment of the present disclosure;
FIG. 4 is a block diagram schematically showing a networking auxiliary device according to an exemplary embodiment of the present disclosure;
FIG. 5 is a diagram schematically showing a process performed between a first terminal and a networking auxiliary device in a networking method according to an exemplary embodiment of the present disclosure;
FIG. 6 is a diagram schematically showing a process performed between a networking auxiliary device and a second terminal in a networking method according to an exemplary embodiment of the present disclosure; and
FIG. 7 is a diagram schematically showing a process performed between a first terminal and a second terminal in a networking method according to an exemplary embodiment of the present disclosure.

### DESCRIPTION OF THE PREFERRED EMBODIMENTS

Various advantages and features of the present invention and methods accomplishing thereof will become apparent from the following description of exemplary embodiments with reference to the accompanying drawings. However, the present invention is not limited to the exemplary embodiments set forth herein and may be modified in different forms within the scope of the appended claims.

Hereinafter, a configuration and an acting effect of exemplary embodiments of the present invention will be described in more detail with reference to the accompanying drawings.

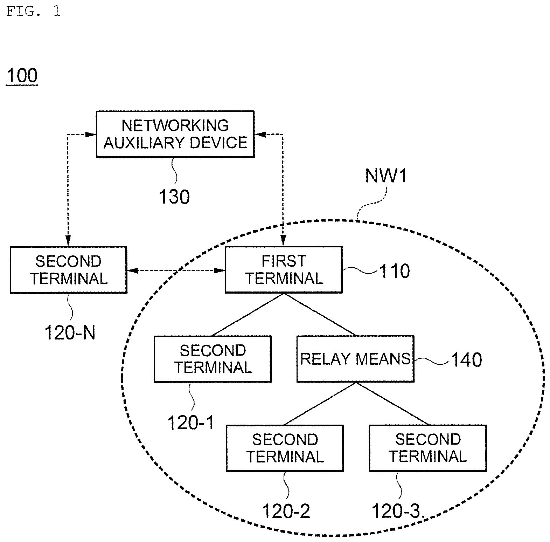

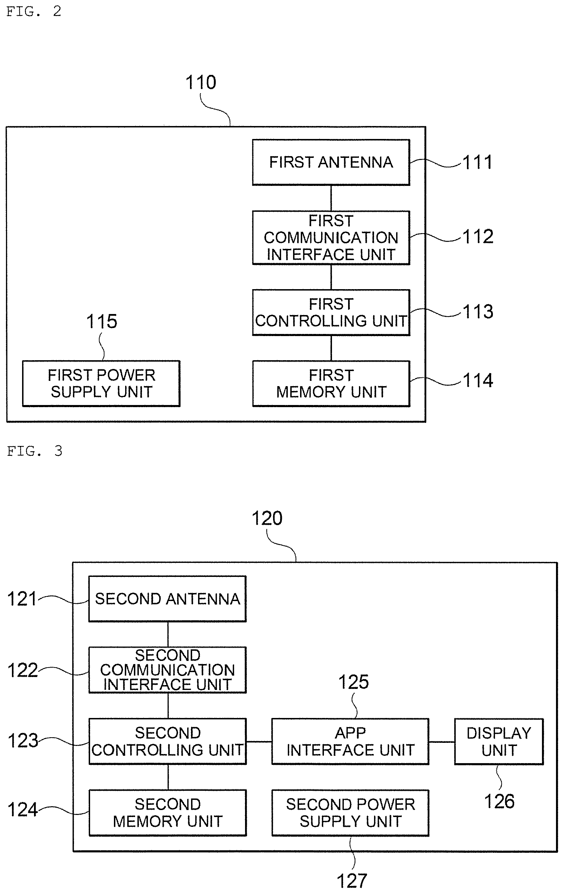

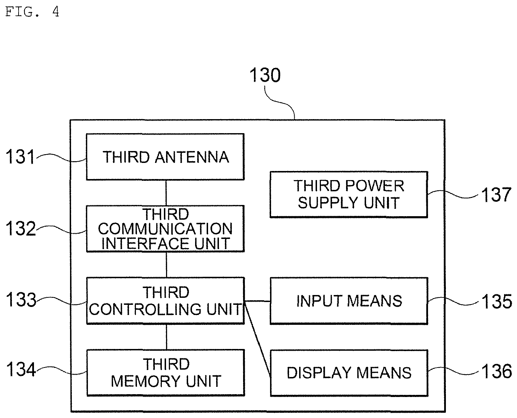

FIG. 1 is a block diagram schematically showing a network system 100 according to an exemplary embodiment of the present invention; FIG. 2 is a block diagram schematically showing a first terminal 110 according to an exemplary embodiment of the present invention; FIG. 3 is a block diagram schematically showing a second terminal 120 according to an exemplary embodiment of the present invention; and FIG. 4 is a block diagram schematically showing a networking auxiliary device 130 according to an exemplary embodiment of the present invention.

Referring to FIGS. 1 to 4, the network system 100 according to an exemplary embodiment may be configured to include a first terminal 110, at least one or more second terminals 120 (120-1, 120-2, 120-3 and 120-N), and a networking auxiliary device 130.

In an exemplary embodiment of the present disclosure, the "network system 100" may be , for example, but not limited to, a system including a plurality of devices that may perform data communication with each other using identification information such as an address, or the like, defined in a network.

Meanwhile, different devices may require a commissioning process in order to be networked with each other. For example, devices included in a region denoted by NW1 in FIG. 1, for example, the second terminals 120-1, 120-2 and 120-3, indicate devices of which a commissioning process is already completed, and a device denoted by 120-N indicates the second terminal 120 of which the commissioning process with NW1, particularly, the first terminal 110 is not completed.

In an exemplary embodiment of the present disclosure, various wireless communication protocols such as a WiFi protocol, a cellular protocol, a Zigbee protocol, and the like, may be applied to the network system 100.

In the present disclosure, the network system 100 to which the Zigbee protocol (IEEE 802.15.4 communication protocol) is applied will be mainly described. In the embodiment illustrated in FIG. 1, for example, the first terminal 110 may correspond to a Zigbee coordinator, the second terminal 120 may correspond to a Zigbee end device, and a relay means 140 may correspond to a router.

First, the first terminal 110 may include a first antenna 111, a first communication interface unit 112, a first controlling unit 113, a first memory unit 114, and a first power supply unit 115. The first terminal 110 may be connected with a separate server (not shown) in a wired/wireless communication scheme to transmit and receive data, and may transmit at least some of these data directly to the second terminal 120 or transmit at least some of these data to the second terminal 120 through the relay means 140.

Here, the first terminal 110 may encrypt at least some of the data transmitted to the second terminal 120, the relay means 140, or the like. In addition, a network key may be used for the encryption. Therefore, the second terminal 120 or the relay means 140 of which a commissioning process with the first terminal 110 is completed may have a network key possessed by the first terminal 110 and decrypt the received data using the network key.

Next, the second terminal 120 may include a second antenna 121, a second communication interface unit 122, a second controlling unit 123, a second memory unit 124, and a second power supply unit 127. In addition, the second terminal 120 may further include appropriate components, if necessary. In an exemplary embodiment of the present disclosure, the second terminal 120 may be, for example, but not limited to, an electronic shelf label (ESL). In this case, the second terminal 120 may further include an application interface unit 125 and a display unit 126. The second terminal 120 may serve to receive data from the first terminal 110 and decrypt the received data to display information such as a name, a price, or the like, of a product.

The networking auxiliary device 130 may include a third antenna 131, a third communication interface unit 132, a third controlling unit 133, a third memory unit 134, and a third power supply unit 137. The networking auxiliary device 130 may further include an input means 135 and/or a display means 136 if necessary. Here, the networking auxiliary device 130 may be implemented by a device having only functions described in the present disclosure or a device implemented by software mounted in a multi-functional mobile device such as a smart phone, a tablet personal computer (PC), or the like.

The antennas 111, 121 and/or 131 and the communication interface units 121, 122 and/or 132 described above may be configured to transmit and receive the data in a wireless communication scheme.

The memory units 114, 124 and/or 134 described above may be configured to store the data if necessary and may be formed of a volatile memory or a non-volatile memory. For example, the volatile memory may store a transmission key mentioned in the present disclosure that may be valid for only a predetermined time.

The power supply units 115, 127 and/or 137 described above may be configured to supply power to the respective devices and may be connected to an external power supply to receive the power or may receive the power from a battery to allow the respective devices to be operated.

Meanwhile, in FIG. 1, one of the second terminals 120 denoted by 120-N may be in a state in which the commissioning process thereof is not completed and may perform the commission process with the first terminal 110 using the networking auxiliary device 130.

In an exemplary embodiment of the present disclosure, the first terminal 110 and the second terminal 120 may use the transmission key to encrypt or decrypt the network key. Here, the transmission key may be invalidated after a predefined time elapses. For instance, the predefined time may be a time period required for completing the commissioning process between the first terminal 110 and the second terminal 120. That is, the transmission key may be maintained in a valid state for only a time required for both of the first terminal 110 and the second terminal 120 to possess the transmission key and for the second terminal 120 to receive, decrypt, and store the network key encrypted using the transmission key, after the transmission key is created.

In an exemplary embodiment of the present disclosure, the transmission key may be created by one of the first terminal 110, the second terminal 120, and the networking auxiliary device 130. In addition, the networking auxiliary device 130 may serve to transmit the transmission key to the first terminal 110 or the second terminal 120.

For example, when the first terminal 110 creates the transmission key, the networking auxiliary device 130 may receive the transmission key from the first terminal 110 and transmit the received transmission key to the second terminal 120.

The first terminal 110 and the second terminal 120 may possess the network key together using the transmission key that may be valid for only a predetermined time and may transmit and receive predetermined data using the network key.

Therefore, security and/or convenience may be improved as compared with the case of performing a commissioning process using an existing ZLL master key, or the like, allocated from an organization defining a communication protocol to each manufacturer. That is, a network hacking risk that may occur in the case in which the ZLL master key is exposed may be decreased. Additionally, the commissioning process may be readily performed even in the case in which the first terminal 110 and the second terminal 120 are manufactured by different manufacturers, such that the convenience may be improved.

According to the exemplary embodiment of the present disclosure, the networking auxiliary device 130 may transmit and receive the transmission key even at low transmission power in a state in which it is adjacent to a transmitting/receiving target device. For example, in a process in which the networking auxiliary device 130 receives the transmission key created by the first terminal 110, when the first terminal 110 lowers transmission power and then transmits the transmission key, only the networking auxiliary device 130 positioned adjacently to the first terminal 110 may receive the transmission key. For example, when the transmission power of the first terminal 110 is lowered to transmission power at which data may be validly received only at a predefined distance, for instance, but not limited to, within one meter and the networking auxiliary device 130 is positioned at a distance within one meter from the first terminal 110, a risk that the transmission key will be leaked may be decreased.

Further, in the case in which the networking auxiliary device 130 transmits the transmission key to the second terminal 120, when the networking auxiliary device 130 transmits the transmission key at low transmission power in a state in which the networking auxiliary device 130 is adjacent to the second terminal 120, a risk that the transmission key will be leaked may be decreased by a principle similar to the principle described above.

Therefore, the security of the commissioning process may be improved.

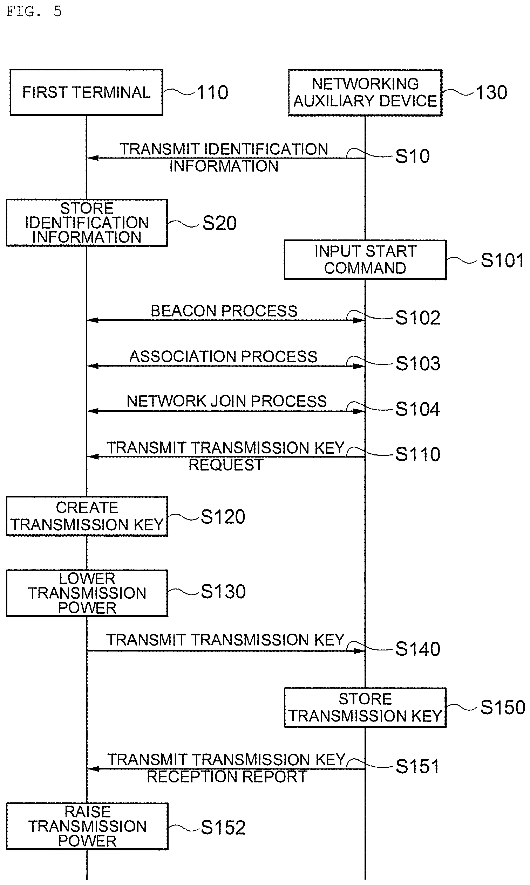

Hereinafter, exemplary embodiments in which the first terminal 110, the second terminal 120, and the networking auxiliary device 130 perform the commissioning process using the transmission key will be described with reference to FIGS. 5 to 7.

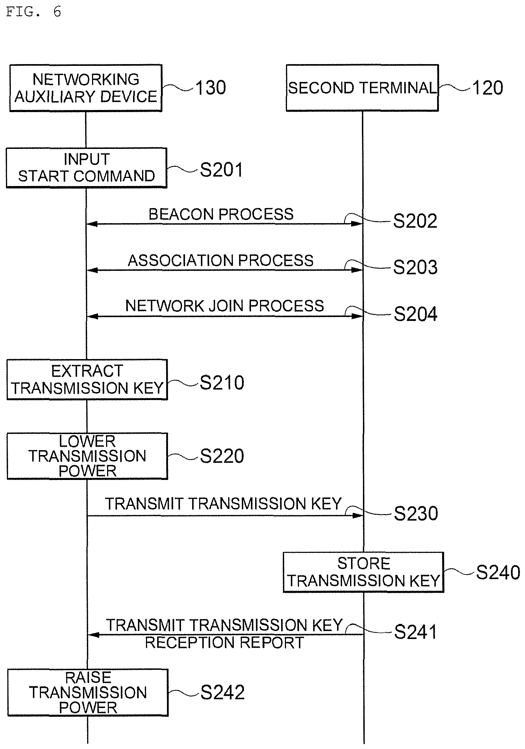

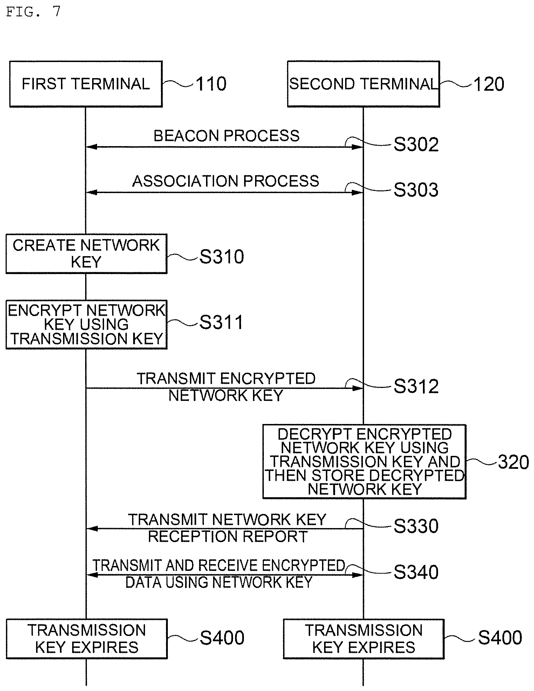

FIG. 5 is a diagram schematically showing a process performed between the first terminal 110 and the networking auxiliary device 130 in a networking method according to an exemplary embodiment of the present disclosure; FIG. 6 is a diagram schematically showing a process performed between the networking auxiliary device 130 and the second terminal 120 in a networking method according to an exemplary embodiment of the present disclosure; and FIG. 7 is a diagram schematically showing a process performed between the first terminal 110 and the second terminal 120 in a networking method according to an exemplary embodiment of the present disclosure.

Referring to FIGS. 5 to 7, the networking methods according to exemplary embodiments of the present disclosure may include at least one or more of a process of transmitting a transmission key to the networking auxiliary device 130 by the first terminal 110, a process of transmitting the transmission key to the second terminal 120 by the networking auxiliary device 130, and a commissioning process using the transmission key by the first terminal 110 and the second terminal 120.

First, the process performed between the first terminal 110 and the networking auxiliary device 130 will be described with reference to FIG. 5.

In an exemplary embodiment of the present disclosure, the networking auxiliary device 130 may transmit a transmission key request to the first terminal 110 (S110). Next, the first terminal 110 may create or generate a transmission key (S120) and transmit the transmission key to the networking auxiliary device 130 (S140). Then, the networking auxiliary device 130 may store the received transmission key (S150) and transmit a transmission key reception report, which indicates that the networking auxiliary device 130 has validly received the transmission key, to the first terminal 110 (S151), if necessary.

In an exemplary embodiment of the present disclosure, the above-mentioned process may be performed in a state in which the networking auxiliary device 130 approaches the first terminal 110. Therefore, a risk that the transmission key will be leaked to the outside may be decreased. For instance, the first terminal 110 may lower transmission power before transmitting the transmission key. For example, in the case in which the first terminal 110 lowers the transmission power to a magnitude at which data transmitted by the first terminal 110 may be validly received only within a distance of, for example, but not limited to, one meter (S130), the transmission key is transmitted in a state in which the networking auxiliary device 130 approaches within the distance of one meter from the first terminal 110, such that the possibility that the transmission key will be leaked may be decreased.

In an exemplary embodiment of the present disclosure, a series of procedures for performing wireless communication between the first terminal 110 and the networking auxiliary device 130 may be preceded. For example, procedures such as a beacon process (S102), an association process (S103), and the like, which are processes preceded in order for two different terminals to perform wireless communication in a Zigbee communication protocol, may be performed. Since the beacon process and the association process are procedures defined in detail in the Zigbee communication protocol, a detailed description thereof will be omitted in the present disclosure.

Meanwhile, an auxiliary commissioning process may also be performed between the first terminal 110 and the networking auxiliary device 130. Similar to the commission process of sharing the network key between the first terminal 110 and the second terminal 120 networked with the first terminal 110, a predetermined key may also be shared between the first terminal 110 and the networking auxiliary device 130.

In an exemplary embodiment of the present disclosure, the first terminal 110 and the networking auxiliary device 130 may share identification information of the networking auxiliary device 130 as the above-mentioned predetermined key with each other. In addition, the identification information may be registered in the first terminal 110 in advance. As shown in FIG. 5, the networking auxiliary device 130 may transmit the identification information to the first terminal 110 (S10) before performing all other processes, and the first terminal 110 may store the identification information (S20). Here, in the case in which the networking auxiliary device 130 is implemented by a predetermined portable device, an identification (ID) number denoted on the portable device by a label, or the like, may be stored in the first terminal 110. In addition, in the case in which the networking auxiliary device 130 is implemented by an application executed in a smart phone, or the like, an ID number set on the application may be transferred to the first terminal 110 using a backhole such as the Ethernet, or the like, and the first terminal 110 may store the ID number. That is, the ID number may be utilized as identification information.

In an exemplary embodiment of the present disclosure, by a start command input to the networking auxiliary device 130 (S101), procedures such as procedures after the beacon process (S102), procedures after the transmitting (S110) of the transmission key request, or the like, may start. Here, the start command may be input to the networking auxiliary device 130 through a predetermined input means 135 such as a hardware button, a software button, or the like. In addition, the networking auxiliary device 130 may further include a separate display means 136 such as a liquid crystal panel, or the like, to output various screens required for operating the networking auxiliary device 130.

In an exemplary embodiment of the present disclosure, the first terminal 110 and the networking auxiliary device 130 may perform a process of confirming the above-mentioned identification information after the association process (S103). For instance, this process is shown as a network join process (S104) in FIG. 5.

In a state in which a series of procedures as described above are performed, the transmission key request or the transmission key may be encrypted using the above-mentioned identification information as a key and be then transmitted, and a receiving end may decrypt the encrypted transmission key request or the encrypted transmission key using the identification information as a key.

Therefore, a risk that the transmission key will be leaked may be decreased.

Meanwhile, the first terminal 110 may again raise the transmission power (S152d) after the process of transmitting the transmission key is completed, thereby making it possible to smoothly perform a function of transmitting data to other devices distantly spaced apart from the first terminal 110. For example, in the case in which the first terminal 110 is a coordinator on the Zigbee communication protocol, it may normally perform an inherent function of wirelessly transmitting data on various commands or information to other end devices or routers.

Next, the process performed between the networking auxiliary device 130 and the second terminal 120 will be described with reference to FIG. 6.

In an exemplary embodiment of the present disclosure, the networking auxiliary device 130 may transmit a transmission key to the second terminal 120 (S230), and the second terminal 120 may receive and store the transmission key (S240). In addition, the second terminal 120 may transmit a transmission key reception report, which indicates that the second terminal 120 has validly received the transmission key to the networking auxiliary device 130 (S241) if necessary.

In an exemplary embodiment of the present disclosure, the above-mentioned process may be performed in a state in which the networking auxiliary device 130 approaches the second terminal 120. Therefore, a risk that the transmission key will be leaked to the outside in the process in which the transmission key is transmitted from the networking auxiliary device 130 to the second terminal 120 may be decreased.

For example, the networking auxiliary device 130 may lower transmission power (S220) before transmitting the transmission key (S230). The networking auxiliary device 130 may again raise the transmission power (S242) after the process of transmitting and storing the transmission key is completed (S230 and S240). For example, in the case in which the networking auxiliary device 130 is implemented by an application executed in a smart phone, or the like, the networking auxiliary device 130 may lower the transmission power only when it is used for a special purpose such as the transmission of the transmission key, or the like, mentioned in the present disclosure and may raise the transmission power to a normal level when it is used for other general purposes, such that the networking auxiliary device 130 may be normally used for other purposes.

However, in the case in which the networking auxiliary device 130 is a portable device used only for a special purpose such as transmission of the transmission key, or the like, a state in which the transmission power is set to be low may be maintained, such that it may be unnecessary to lower or raise the transmission power.

In an exemplary embodiment of the present disclosure, a series of procedures for performing wireless communication between the networking auxiliary device 130 and the second terminal 120 may also be preceded. For example, procedures such as a beacon process (S202), an association process (S203), and the like, which are processes preceded in order for two different terminals to perform wireless communication in the Zigbee communication protocol, may be performed.

Meanwhile, an auxiliary commissioning process may also be performed between the networking auxiliary device 130 and the second terminal 120.

In an exemplary embodiment of the present disclosure, the second terminal 120 and the networking auxiliary device 130 may have a common standard key such as a default TC link key, or the like, and may perform a network join process (S204) using the standard key.

In an exemplary embodiment of the present disclosure, by a start command input to the networking auxiliary device 130 (S201), procedures such as procedures after the beacon process (S202), procedures after the transmitting (S230) of the transmission key, or the like, may start. For instance, the start command may be input through a separate input means 135 included in the networking auxiliary device 130.

In a state in which a series of procedures as described above are performed, the transmission key may be encrypted using the above-mentioned standard key and be then transmitted, and the second terminal 120 may receive the encrypted transmission key and decrypt the encrypted transmission key using the standard key.

Therefore, a risk that the transmission key will be leaked in the process in which the transmission key is transmitted from the networking auxiliary device 130 to the second terminal 120 may be decreased.

Next, the process performed between the first terminal 110 and the second terminal 120 will be described with reference to FIG. 7.

It may be understood that the first terminal 110 and the second terminal 120 commonly possess the transmission key in the process described above with reference to FIGS. 5 and 6.

In an exemplary embodiment of the present invention, the first terminal 110 may encrypt a network key using the transmission key (S311), and transmit the encrypted network key to the second terminal 120 (S312). The second terminal 120 may decrypt the encrypted network key using the transmission key and then store the decrypted network key (S320). Here, since concepts and features of the network key and the transmission key have been described above, a description thereof will be omitted. However, if necessary, a process of creating the network key by the first terminal 110 (S310) may be further performed before the process of encrypting of the network key using the transmission key (S311).

In addition, a series of procedures for performing wireless communication between the first terminal 110 and the second terminal 120 may be preceded. That is, as described above with reference to FIGS. 5 and 6, a beacon process (S302) and/or an association process (S303) may be performed.

Further, the second terminal 120 may transmit a network key reception report, which indicates that the second terminal 120 has normally received the network key, to the first terminal 110 (S330) if necessary.

The commissioning process between the first terminal 110 and the second terminal 120 may be completed through a series of procedures as described above. Then, general functions of, for example, but not limited to, transmitting, receiving, and decrypting the encrypted data using the network key may be performed (S340). In addition, in a state in which the commissioning process is completed as described above, the transmission key may expire or be invalidated (S400).

The commissioning process of transmitting the transmission key possessed by the first terminal 110 to the second terminal 120 through the networking auxiliary device 130 and sharing the network key using the transmission key may be performed. Here, since the transmission key may be valid only for a preset time and may expire or be invalidated when the preset time elapses, even though the transmission key is leaked, a risk that the network system 100 will be hacked may be decreased. Further, as the transmission key may be transmitted in a state in which the networking auxiliary device 130 approaches the first terminal 110 or the second terminal 120 and the transmission power is lowered, a risk that the transmission key will be leaked may be decreased. In addition, in some exemplary embodiments of the present disclosure, since the transmission key itself may be encrypted using the identification information of the networking auxiliary device 130 or the standard key commonly possessed by the networking auxiliary device 130 and the second terminal 120 and be then transmitted, a risk that the transmission key will be leaked may be reduced.

Further, a manufacturer may perform a process of commissioning other new terminals in the network system 100 without modifying the network system 100 by a complicated or difficult technology, and convenience of a user may be improved.

According to some exemplary embodiments of the present disclosure, it is possible to improve security while readily commissioning terminals.

## Claims

1. A network system (100) comprising:
a first terminal (110) having a network key, the first terminal (110) encrypting at least one data using the network key, transmitting the encrypted data, and receiving and decrypting the data encrypted using the network key;
a second terminal (120); and
a networking auxiliary device (130) providing a transmission key, which is invalidated when a predefined time elapses, to the first terminal and/or the second terminal,
wherein the first terminal (110) transmits the network key encrypted using the transmission key to the second terminal (120), and the second terminal (120) decrypts the network key, which is encrypted using the transmission key, using the transmission key and stores the decrypted network key.

2. The network system (100) according to claim 1, wherein the transmission key is generated by at least one selected among the first terminal (110), the second terminal (120), and the networking auxiliary device (130).

3. The network system (100) according to claim 2, wherein the at least one selected among the first terminal (110), the second terminal (120), and the networking auxiliary device (130) transmits the transmission key in a state in which the at least one selected among the first terminal (110), the second terminal (120), and the networking auxiliary device (130) lowers transmission power to a predefined level or less.

4. The network system (100) according to claim 3, wherein the networking auxiliary device (130) transmits and receives the transmission key in a state in which the networking auxiliary device (130) approaches the first terminal (110) or the second terminal (120) within one meter from the first terminal (110) or the second terminal (120), and the transmission power is lowered to a level or less at which the transmission key is validly received only within one meter.

5. A networking method of a network system including a first terminal (110) having a network key, a second terminal (120), and a networking auxiliary device (130), the networking method comprising:
transmitting a transmission key to the networking auxiliary device (130), by the first terminal (110);
receiving and storing the transmission key, by the networking auxiliary device (130);
transmitting the transmission key to the second terminal (120), by the networking auxiliary device (130);
receiving and storing the transmission key, by the second terminal (120);
encrypting the network key using the transmission key and then transmitting the encrypted network key to the second terminal (120), by the first terminal (110);
receiving the encrypted network key and then decrypting the encrypted network key using the transmission key, by the second terminal (120); and
transmitting and receiving data encrypted using the network key between the first terminal (110) and the second terminal (120),
wherein the transmission key is invalidated when a predefined time elapses.

6. The networking method according to claim 5, wherein the transmission key is transmitted in a state in which transmission power of the first terminal (110) or the networking auxiliary device (130) is lowered to a predefined level or less.

7. The networking method according to claim 6, wherein the transmission key is transmitted and received in a state in which the networking auxiliary device (130) approaches the first terminal (110) or the second terminal (120) within one meter from the first terminal (110) or the second terminal (120), and the transmission power is lowered to a level or less at which the transmission key is validly received only within one meter.

8. The networking method according to claim 7, wherein the transmission key is transmitted and received between the first terminal (110) and the networking auxiliary device (130) in a state in which the transmission key is encrypted using identification information of the networking auxiliary device (130), and
the transmission key is transmitted and received between the networking auxiliary device (130) and the second terminal (120) in a state in which the transmission key is encrypted using a common standard key.

9. The networking method according to claim 8, wherein the transmitting and receiving of the data encrypted using the network key between the first terminal (110) and the second terminal (120) is performed in a state in which the transmission power of the first terminal (110) is raised.

## Patentansprüche

1. Netzwerksystem (100), Folgendes umfassend:
ein erstes Endgerät (110) mit einem Netzwerkschlüssel, wobei das erste Endgerät (110) wenigstens einen Datensatz unter Verwendung des Netzwerkschlüssels verschlüsselt, den verschlüsselten Datensatz überträgt und den unter Verwendung des Netzwerkschlüssels verschlüsselten Datensatz empfängt und entschlüsselt;
ein zweites Endgerät (120); und
ein Netzwerkzusatzgerät (130), das dem ersten Endgerät und/oder dem zweiten Endgerät einen Übertragungsschlüssel bereitstellt, der unwirksam gemacht wird, wenn eine vorgegebene Zeit verstreicht,
wobei das erste Endgerät (110) den unter Verwendung des Übertragungsschlüssels verschlüsselten Netzwerkschlüssel an das zweite Endgerät (120) überträgt und das zweite Endgerät (120) den unter Verwendung des Übertragungsschlüssels verschlüsselten Netzwerkschlüssel unter Verwendung des Übertragungsschlüssels entschlüsselt und den entschlüsselten Netzwerkschlüssel speichert.

2. Netzwerksystem (100) nach Anspruch 1, wobei der Übertragungsschlüssel durch wenigstens eines, ausgewählt aus dem ersten Endgerät (110), dem zweiten Endgerät (120) und dem Netzwerkzusatzgerät (130), erzeugt wird.

3. Netzwerksystem (100) nach Anspruch 2, wobei das wenigstens eine, ausgewählt aus dem ersten Endgerät (110), dem zweiten Endgerät (120) und dem Netzwerkzusatzgerät (130), den Übertragungsschlüssel in einem Zustand überträgt, indem das wenigstens eine, ausgewählt aus dem ersten Endgerät (110), dem zweiten Endgerät (120) und dem Netzwerkzusatzgerät (130), die Übertragungsleistung auf ein vorgegebenes Niveau oder weniger verringert.

4. Netzwerksystem (100) nach Anspruch 3, wobei das Netzwerkzusatzgerät (130) den Übertragungsschlüssel in einem Zustand überträgt und empfängt, in dem sich das Netzwerkzusatzgerät (130) innerhalb eines Meters von dem ersten Endgerät (110) oder dem zweiten Endgerät (120) an das erste Endgerät (110) oder das zweite Endgerät (120) nähert und die Übertragungsleistung auf ein vorgegebenes Niveau oder weniger, auf dem der Übertragungsschlüssel nur innerhalb eines Meters gültig empfangen wird, verringert ist.

5. Vernetzungsverfahren eines Netzwerksystems, das ein erstes Endgerät (110) mit einem Netzwerkschlüssel, ein zweites Endgerät (120) und ein Netzwerkzusatzgerät (130) enthält, wobei das Vernetzungsverfahren Folgendes umfasst:
Übertragen eines Übertragungsschlüssels an das Netzwerkzusatzgerät (130) durch das erste Endgerät (110);
Empfangen und Speichern des Übertragungsschlüssels durch das Netzwerkzusatzgerät (130);
Übertagen des Übertragungsschlüssels an das zweite Endgerät (120) durch das Netzwerkzusatzgerät (130);
Empfangen und Speichern des Übertragungsschlüssels durch das zweite Endgerät (120);
Verschlüsseln des Netzwerkschlüssels unter Verwendung des Übertragungsschlüssels und dann Übertragen des verschlüsselten Netzwerkschlüssels an das zweite Endgerät (120) durch das erste Endgerät (110);
Empfangen des verschlüsselten Netzwerkschlüssels und dann Entschlüsseln des verschlüsselten Netzwerkschlüssels unter Verwendung des Übertragungsschlüssels durch das zweite Endgerät (120); und
Übertragen und Empfangen von unter Verwendung des Netzwerkschlüssels verschlüsselten Daten zwischen dem ersten Endgerät (110) und dem zweiten Endgerät (120),
wobei der Übertragungsschlüssel ungültig gemacht wird, wenn eine vorgegebene Zeit verstreicht.

6. Vernetzungsverfahren nach Anspruch 5, wobei der Übertragungsschlüssel in einem Zustand übertragen wird, in dem eine Übertragungsleistung des ersten Endgeräts (110) oder des Netzwerkzusatzgeräts (130) auf ein vorgegebenes Niveau oder weniger verringert ist.

7. Vernetzungsverfahren nach Anspruch 6, wobei der Übertragungsschlüssel in einem Zustand übertragen und empfangen wird, in dem sich das Netzwerkzusatzgerät (130) dem ersten Endgerät (110) beziehungsweise dem zweiten Endgerät (120) auf einen Meter von dem ersten Endgerät (110) beziehungsweise dem zweiten Endgerät (120) nähert und die Übertragungsleistung auf ein vorgegebenes Niveau oder weniger, auf dem der Übertragungsschlüssel nur innerhalb eines Meters gültig empfangen wird, verringert wird.

8. Vernetzungsverfahren nach Anspruch 7, wobei der Übertragungsschlüssel zwischen dem ersten Endgerät (110) und dem Netzwerkzusatzgerät (130) in einem Zustand übertragen und empfangen wird, in dem der Übertragungsschlüssel unter Verwendung von Identifizierungsinformationen des Netzwerkzusatzgeräts (130) verschlüsselt wird, und
der Übertragungsschlüssel zwischen dem Netzwerkzusatzgerät (130) und dem zweiten Endgerät (120) in einem Zustand übertragen und empfangen wird, in dem der Übertragungsschlüssel unter Verwendung eines gewöhnlichen Standardschlüssels verschlüsselt ist.

9. Vernetzungsverfahren nach Anspruch 8, wobei das Übertragen und Empfangen des unter Verwendung des Netzwerkschlüssels verschlüsselten Datensatzes zwischen dem ersten Endgerät (110) und dem zweiten Endgerät (120) in einem Zustand durchgeführt werden, in dem die Übertragungsleistung des ersten Endgeräts (110) erhöht ist.

## Revendications

1. Système de réseau (100) comprenant :
un premier terminal (110) ayant une clé de réseau, le premier terminal (110) chiffrant au moins une donnée à l'aide de la clé de réseau, transmettant la donnée chiffrée, et recevant et déchiffrant la donnée chiffrée à l'aide de la clé de réseau ;
un second terminal (120) ; et
un dispositif auxiliaire de réseautage (130) fournissant une clé de transmission, qui est invalidée après l'écoulement d'un temps prédéfini, au premier terminal et/ou au second terminal,
dans lequel le premier terminal (110) transmet la clé de réseau chiffrée à l'aide de la clé de transmission au second terminal (120), et le second terminal (120) déchiffre la clé de réseau, qui est chiffrée à l'aide de la clé de transmission, à l'aide de la clé de transmission et stocke la clé de réseau déchiffrée.

2. Système de réseau (100) selon la revendication 1, dans lequel la clé de transmission est générée par au moins un élément choisi parmi le premier terminal (110), le second terminal (120) et le dispositif auxiliaire de réseautage (130).

3. Système de réseau (100) selon la revendication 2, dans lequel l'au moins un élément choisi parmi le premier terminal (110), le second terminal (120) et le dispositif auxiliaire de réseautage (130) transmet la clé de transmission dans un état dans lequel l'au moins un élément choisi parmi le premier terminal (110), le second terminal (120) et le dispositif auxiliaire de réseautage (130) diminue la puissance de transmission à un niveau prédéfini ou moins.

4. Système de réseau (100) selon la revendication 3, dans lequel le dispositif auxiliaire de réseautage (130) transmet et reçoit la clé de transmission dans un état dans lequel le dispositif auxiliaire de réseautage (130) s'approche du premier terminal (110) ou du second terminal (120) à moins d'un mètre du premier terminal (110) ou du second terminal (120), et la puissance de transmission est diminuée à un niveau ou moins auquel la clé de transmission est reçue de façon valide uniquement à moins d'un mètre.

5. Procédé de réseautage d'un système de réseau comportant un premier terminal (110) ayant une clé de réseau, un second terminal (120), et un dispositif auxiliaire de réseautage (130), le procédé de réseautage comprenant :
la transmission d'une clé de transmission au dispositif auxiliaire de réseautage (130), par le premier terminal (110) ;
la réception et le stockage de la clé de transmission, par le dispositif auxiliaire de réseautage (130) ;
la transmission de la clé de transmission au second terminal (120), par le dispositif auxiliaire de réseautage (130) ;
la réception et le stockage de la clé de transmission, par le second terminal (120) ;
le chiffrement de la clé de réseau à l'aide de la clé de transmission puis la transmission de la clé de réseau chiffrée au second terminal (120), par le premier terminal (110) ;
la réception de la clé de réseau chiffrée, puis le déchiffrement de la clé de réseau chiffrée à l'aide de la clé de transmission, par le second terminal (120) ; et
la transmission et la réception de la donnée chiffrée à l'aide de la clé de réseau entre le premier terminal (110) et le second terminal (120),
dans lequel la clé de transmission est invalidée après écoulement d'un temps prédéfini.

6. Procédé de réseautage selon la revendication 5, dans lequel la clé de transmission est transmise dans un état dans lequel la puissance de transmission du premier terminal (110) ou du dispositif auxiliaire de réseautage (130) est diminuée à un niveau prédéfini ou moins.

7. Procédé de réseautage selon la revendication 6, dans lequel la clé de transmission est transmise et reçue dans un état dans lequel le dispositif auxiliaire de réseautage (130) s'approche du premier terminal (110) ou du second terminal (120) à moins d'un mètre du premier terminal (110) ou du second terminal (120), et la puissance de transmission est diminuée à un niveau ou moins auquel la clé de transmission est reçue de façon valide uniquement à moins d'un mètre.

8. Procédé de réseautage selon la revendication 7, dans lequel la clé de transmission est transmise et reçue entre le premier terminal (110) et le dispositif auxiliaire de réseautage (130) dans un état dans lequel la clé de transmission est chiffrée à l'aide d'informations d'identification du dispositif auxiliaire de réseautage (130), et
la clé de transmission est transmise et reçue entre le dispositif auxiliaire de réseautage (130) et le second terminal (120) dans un état dans lequel la clé de transmission est chiffrée à l'aide d'une clé standard courante.

9. Procédé de réseautage selon la revendication 8, dans lequel la transmission et la réception de la donnée chiffrée à l'aide de la clé de réseau entre le premier terminal (110) et le second terminal (120) sont réalisées dans un état dans lequel la puissance de transmission du premier terminal (110) est augmentée.
